# FASCICULE DE BREVET EUROPEEN

(11) **EP 2 769 962 B1**
(45) Date de publication et mention de la délivrance du brevet: **12.10.2016**
(21) Numéro de dépôt: 14156795.8
(22) Date de dépôt: 26.02.2014
(51) Int. Cl.: C03C 3/064, C03C 8/24, H01M 8/02

(54) **Procédé de synthèse d'un verre de scellement par voie sol-gel**
Verfahren zur Synthese von Abdichtglas mit Hilfe des Sol-Gel-Verfahrens
Method for synthesising a solder glass by sol-gel process

(30) Priorité: 26.02.2013 FR 1351688
(43) Date de publication de la demande: 27.08.2014
(73) Titulaire: Electricité de France, 75008 Paris (FR); Centre National de la Recherche Scientifique (CNRS), 75016 Paris (FR)
(72) Inventeur: Dailly, Julian, 76139 Hagsfed (DE); Marrony, Mathieu, 67500 Hagenau (FR); Ansart, Florence, 31670 Labege (FR); Puig, Jean, 31520 Ramonville (FR); Lenormand, Pascal, 31400 Toulouse (FR)
(74) Mandataire: Regimbeau

(56) Documents cités:
- DE-A1-102010 035 251
- DE-A1-102011 080 352
- PUIG J ET AL: "Sol gel synthesis and characterization of barium (magnesium) aluminosilicate glass sealants for solid oxide fuel cells", JOURNAL OF NON-CRYSTALLINE SOLIDS, vol. 357, no. 19, 18 juillet 2011 (2011-07-18), pages 3490-3494, XP028254215, ISSN: 0022-3093, DOI: 10.1016/J.JNONCRYSOL.2011.06.025 [extrait le 2011-07-01]
- MEINHARDT K D ET AL: "Synthesis and properties of a barium aluminosilicate solid oxide fuel cell glass-ceramic sealant", JOURNAL OF POWER SOURCES, ELSEVIER SA, CH, vol. 182, no. 1, 15 juillet 2008 (2008-07-15), pages 188-196, XP022703995, ISSN: 0378-7753, DOI: 10.1016/J.JPOWSOUR.2008.03.079 [extrait le 2008-04-07]
- DIETER GOEDEKE ET AL: "New Glass Ceramic Sealants for SOFC", ECS TRANSACTIONS, vol. 25, 1 janvier 2009 (2009-01-01), pages 1483-1490, XP055080281, ACS ISSN: 1938-5862, DOI: 10.1149/1.3205682
- DONALD I W: "PREPARATION, PROPERTIES AND CHEMISTRY OF GLASS- AND GLASS-CERAMIC- TO-METAL SEALS AND COATINGS", JOURNAL OF MATERIALS SCIENCE, KLUWER ACADEMIC PUBLISHERS, vol. 28, no. 11, 1 juin 1993 (1993-06-01), pages 2841-2886, XP000891415, ISSN: 0022-2461, DOI: 10.1007/BF00354689
- FERGUS ET AL: "Sealants for solid oxide fuel cells", JOURNAL OF POWER SOURCES, ELSEVIER SA, CH, vol. 147, no. 1-2, 9 septembre 2005 (2005-09-09), pages 46-57, XP027756688, ISSN: 0378-7753 [extrait le 2005-09-09]

## Description

### Domaine technique

Il est question dans la présente du domaine technique des matériaux de scellement pour piles à combustible ou électrolyseurs hautes températures. Plus particulièrement, il est question du domaine technique des verres de scellement pour piles à combustible ou électrolyseurs hautes températures.

### Technique antérieure

Une pile à combustible hautes températures comprend de manière générale au moins un compartiment anodique et un compartiment cathodique séparés par une membrane. Les piles à combustible à membrane céramique sont alimentées par un combustible (dihydrogène, méthane ou gaz de synthèse) et un comburant (air ou dioxygène).

Une pile à combustible hydrogène-oxygène est dite propre car son fonctionnement ne produit que de l'eau et de l'électricité lorsque le combustible injecté est du dihydrogène et peu de méthane et gaz de synthèse, en comparaison à de l'énergie issue de produits pétrolier, quand le combustible est carboné et consomme uniquement des gaz. La pile à combustible hydrogène-oxygène comprend successivement de manière empilée un compartiment anodique, une membrane faisant office d'électrolyte et un compartiment cathodique. Le compartiment anodique comporte une première plaque bipolaire pour la distribution et l'évacuation des gaz (hydrogène, vapeur d'eau, méthane, gaz de synthèse) ainsi que le collectage du courant, et une anode. Le compartiment cathodique comporte une cathode et une deuxième plaque bipolaire pour la distribution et l'évacuation des gaz (oxygène et air pour une pile à combustible à oxyde solide ; oxygène, air et vapeur d'eau pour une pile à combustible à céramique conductrice protonique).

Deux types de membranes peuvent être utilisés : la membrane échangeuse de protons et la membrane anionique.

Dans une pile à combustible comprenant une membrane échangeuse de proton (c'est-à-dire une pile à combustible à céramique conductrice protonique ou encore « Protonic Ceramic Fuel Cell » en anglais), l'hydrogène arrive par la première plaque bipolaire à l'anode où il subit une oxydation entrainant sa dissociation en protons et électrons. Les protons traversent la membrane vers la cathode tandis que les électrons sont dirigés vers un circuit extérieur avant d'être redirigés vers la cathode : un courant électrique est alors créé dans le circuit extérieur de l'anode vers la cathode. À la cathode, de l'oxygène est amené par la deuxième plaque bipolaire et rencontre les protons et les électrons, subissant alors une réduction formant de l'eau. L'eau est évacuée en sortie de la deuxième plaque bipolaire.

Dans une pile à combustible comprenant une membrane céramique conductrice anionique (« Solid Oxide Fuel Cell » en anglais), l'hydrogène arrive par la première plaque bipolaire à l'anode où il subit une oxydation entrainant sa dissociation en protons et électrons. Les électrons sont dirigés vers un circuit extérieur avant d'être redirigés vers la cathode. À la cathode, de l'oxygène est amené par la deuxième plaque bipolaire et rencontre les électrons pour former un assemblage d'ions oxyde (O²⁻). Les ions oxyde traversent la membrane vers l'anode et réagissent avec les protons présents pour former de l'eau, qui est alors évacuée en sortie de la première plaque bipolaire.

Un électrolyseur hautes températures comprend de manière générale au moins un compartiment anodique et un compartiment cathodique séparés par une membrane.

Un électrolyseur produit du dihydrogène et du dioxygène et consomme uniquement de la vapeur d'eau et de l'électricité. L'électrolyseur comprend successivement de manière empilée un compartiment cathodique comportant une première plaque bipolaire pour la distribution et l'évacuation des gaz (vapeur d'eau, dioxyde et monoxyde de carbone, dihydrogène ou azote) et le collectage du courant ainsi qu'une cathode, une membrane faisant office d'électrolyte et un compartiment anodique comportant une anode et une deuxième plaque bipolaire pour la distribution et l'évacuation des gaz (oxygène, air, vapeur d'eau, dioxyde, monoxyde de carbone ou azote) et le collectage du courant.

Dans un électrolyseur comprenant une membrane céramique oxyde (encore appelée « ceramic oxide membrane » en anglais) à conduction anionique, la vapeur d'eau arrive par la première plaque bipolaire à la cathode où elle subit une oxydation entraînant sa dissociation en protons et en ions oxyde (O²⁻). Les protons forment du dihydrogène tandis que les ions oxyde traverse la membrane pour former du dioxygène à l'anode.

Dans un électrolyseur comprenant une membrane céramique oxyde à conduction protonique, la vapeur d'eau arrive par la deuxième plaque bipolaire à l'anode où elle subit une réduction entraînant sa dissociation en protons et en ions oxyde (O²⁻). Les ions oxyde forment du dioxygène tandis que les protons traversent la membrane jusqu'à la cathode pour former du dihydrogène.

Un matériau de scellement doit être utilisé pour former des joints assurant la séparation des compartiments anodiques et cathodiques, et empêcher tout contact entre le comburant (l'oxygène dans les exemples ci-dessus) et le combustible (l'hydrogène dans les exemples ci-dessus). Ces joints doivent pouvoir résister chimiquement aux milieux oxydants et réducteur des différentes piles et électrolyseurs et également thermiquement aux hautes températures, typiquement d'environ 500°C à environ 800°C.

Le joint permet également l'isolation électrique entre les deux pôles de la cellule. Il existe actuellement trois types de matériaux de scellement : les matériaux de brasages métalliques, les matériaux de scellement compressifs et les verres. Les matériaux de brasages métalliques sont rigides et peu exploités du fait de la réactivité des alliages dont ils sont constitués avec les matériaux de la cellule et/ou du coût des métaux nobles utilisés tels que l'argent, l'or ou le cuivre. Les matériaux de scellement compressifs n'entrainent pas de réactions chimiques. Cependant ce dernier type de scellement nécessite l'application d'une pression constante coûteuse en énergie. Les verres sont les matériaux de scellement les plus utilisés pour les cellules de piles à combustible et les électrolyseurs hautes températures. Leur comportement viscoélastique au-dessus de leurs domaines de transition vitreuse permet une mise en oeuvre facilitée et particulièrement intéressante dans le cadre de géométries complexes.

Parmi ces verres, les vitrocéramiques sont particulièrement de bons candidats pour les matériaux de scellement du fait de leurs bonnes propriétés mécaniques et de la possibilité d'utiliser une large gamme de compositions afin de contrôler certaines propriétés physico-chimiques telles que la viscosité, le coefficient d'expansion thermique et la température de transition vitreuse.

Ces vitrocéramiques sont généralement fabriquées par voie solide-solide en réalisant la fusion des précurseurs oxydes et carbonates. Le document « Journal of Power Sources, Synthesis and properties of barium aluminosilicate solid oxide fuel cell glass-ceramic sealant, de K.D. Meinhardt, D.-S. Kim, Y.-S Chou et K.S WEIL » décrit différents verres de scellement pour une pile à combustible hautes températures, le procédé de fabrication par voie solide-solide des différents verres de scellement ainsi que des tests qui ont été réalisés sur de tels verres.

Cependant, leur fabrication reste couteuse en énergie et implique une température de l'élaboration du verre très élevée, généralement comprise entre environ 1500°C et environ 1700°C.

Le document J. Puig et al., Journal of Non-Crystalline Solids, 2011, 357, 3490-3494 décrit la synthèse sol-gel des verres de scellement du type barium (magnesium) aluminosilicate pour une pile à combustible hautes témperatures.

### Présentation

Un objectif est donc de pallier un des inconvénients de la technique antérieure présentée ci-dessus.

Pour cela, un procédé de synthèse d'un verre de scellement par voie sol-gel, comprenant les étapes de :
- la formation d'une solution par la mise en solution d'un alcoxyde de silicium dans un solvant ;
- l'hydrolyse de l'alcoxyde de silicium dans la solution pour former un monomère, un oligomère inorganique ou un mélange de ceux-ci ;
- l'ajout d'un précurseur d'alumine, d'un précurseur d'oxyde de baryum, d'un précurseur d'oxyde de calcium, d'un précurseur d'oxyde de bore, d'un précurseur d'oxyde de magnésium, d'eau et d'un acide dans la solution formant avec l'alcoolate de silicium un mélange ;
- l'agitation et la condensation du mélange pour former un xérogel ;
- la pulvérisation du xérogel pour obtenir une poudre d'oxydes ;
- l'élaboration du verre à partir de la poudre d'oxydes pour obtenir le verre de scellement.

Ainsi, l'élaboration du verre peut être réalisée, à une température plus faible que la température normalement utilisée pour cette étape avec les verres habituels. Cette température plus faible d'élaboration, rendue possible grâce à l'utilisation de la poudre d'oxyde obtenue par voie sol-gel est comprise entre environ 1100°Cet environ 1300°C.

Il est également question d'un verre de composition suivante :

(BaO)ᵤ(AL₂O₃)ᵥ(CaO)_{w}(SiO₂)ₓ(B₂O₃)_{y}(MgO)_{z};

Avec 0,3 < u < 0,4 ; 0,015 < v < 0,035 ; 0,05 < w < 0,15 ; 0,25 < x < < 0,4 ; 0,05 < y < 0,15 ; et 0,05 < z < 0,15.

Enfin, il est aussi question d'une pile à combustible ou d'un électrolyseur hautes températures comprenant une succession de compartiments anodiques, une succession de compartiments cathodiques, une succession de joints, les compartiments anodiques et cathodiques étant alternés et empilés, dans lequel les joints sont réalisés en verre tel que décrit ci-dessus.

### Dessins

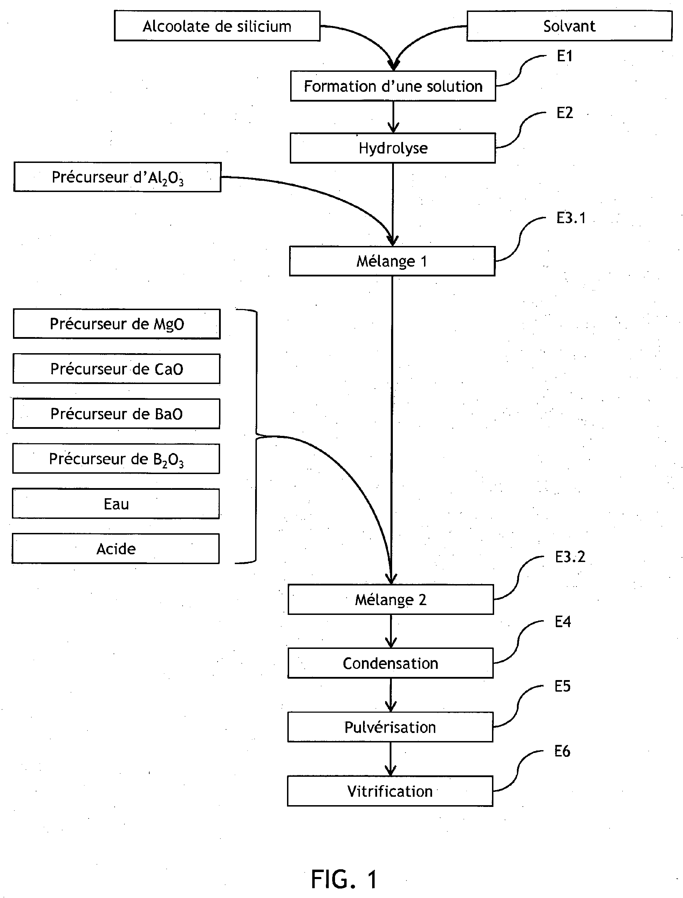

D'autres objectifs, caractéristiques et avantages apparaitront à la lecture de la description qui suit en référence à l'unique figure 1 donnée à titre illustratif et non limitatif. La figure 1 représente schématiquement les différentes étapes du procédé de synthèse d'un verre de scellement par voie sol-gel tel que décrit ci-dessous.

### Description

Un procédé de synthèse d'un verre de scellement par voie sol-gel est décrit ci-après en référence à la figure 1.

Ce procédé comprend la formation **E1** d'une solution par la mise en solution d'un alcoxyde de silicium communément utilisé dans l'industrie dans un solvant alcoolique (éthanol).

L'alcoxyde de silicium peut être choisi parmi: le tétraéthylorthosilicate (TEOS), le tétraméthylorthosilicate (TMOS), leurs dérivés ou leurs mélanges. De préférence, l'alcoxyde de silicium est le TEOS dont la réaction produit de l'éthanol, alcool non toxique contrairement au TMOS dont la réaction produit du méthanol.

Le solvant peut être choisi parmi : l'éthanol, le méthanol, le propanol, ou leurs mélanges. De préférence, le solvant est l'éthanol. Le ratio molaire entre l'alcoxyde de silicium et le solvant est par exemple d'environ 1/15 (alcoxyde de silicium/solvant) à environ 1 /5, de préférence d'environ 1 /12 à environ 1 /8, encore de préférence environ 1/10.

Le procédé comprend ensuite l'hydrolyse **E2** de l'alcoxyde de silicium dans la solution pour former un monomère ou un oligomère inorganique voire un mélange de ceux-ci. L'hydrolyse est réalisée par l'ajout d'une solution aqueuse acidifiée dans la solution contenant l'alcoxyde de silicium. La solution aqueuse acidifiée comprend un acide et le ratio molaire entre l'eau et les protons apportés par l'acide est d'environ 1/0,10 à environ 1/0,01 (eau/acide), de préférence d'environ 1/0,05 à environ 1/0,01, encore de préférence d'environ 1/0,03. L'acide est par exemple de l'acide chlorhydrique, de l'acide nitrique ou de l'acide acétique. De préférence, l'acide est de l'acide chlorhydrique.

L'hydrolyse peut être réalisée à une température comprise entre environ 50°C et environ 70°C, de préférence entre environ 55°C et environ 65°C, encore de préférence d'environ 60°C, pendant environ 1 heure à environ 5 heures, de préférence environ 2 heures à environ 4 heures, encore de préférence environ 3 heures.

Le procédé comprend aussi l'ajout d'un précurseur d'alumine, d'un précurseur d'oxyde de baryum, d'un précurseur d'oxyde de calcium, d'un précurseur d'oxyde de bore, d'un précurseur d'oxyde de magnésium, d'eau et d'un acide dans la solution formant avec l'alcoxyde de silicium un mélange **E3.1, E3.2.**

Le précurseur d'alumine peut être choisi parmi : le tri-sec-butoxyde d'aluminium, le nitrate d'aluminium, le chlorure d'aluminium, et leurs mélanges. Le précurseur d'alumine est de préférence le tri-sec-butoxyde d'aluminium. Le précurseur d'alumine peut être ajouté à la solution avant les autres précurseurs, l'eau et l'acide pour former un premier mélange **E3.1.** De manière générale, le précurseur d'alumine est introduit en premier dans la solution contenant le monomère, l'oligomère inorganique ou un mélange de ceux-ci, il sera alors plus facile d'obtenir des sols homogènes. Dans ce cas, la solution peut être ensuite maintenue à une température comprise entre environ 15°C et environ 30°C, de préférence entre environ 15°C et environ 25°C, encore de préférence environ 20°C, pendant environ 10 à environ 20 heures, de préférence environ 12 à environ 16 heures, encore de préférence environ 14 heures afin de permettre une meilleure homogénéisation du mélange final. Les autres précurseurs sont dilués dans de l'eau en présence d'un acide, de préférence l'acide éthanoïque afin de demeurer à un pH de 3-4 pour favoriser la dissolution des précurseurs dans la solution, puis sont ensuite ajoutés pour former un deuxième mélange **E3.2.**

Le précurseur d'oxyde de baryum peut être choisi parmi : l'acétate de baryum, le chlorure de baryum, l'oxyde de baryum, le nitrate de baryum, et leurs mélanges. Le précurseur d'oxyde de baryum est de préférence l'acétate de baryum qui est le précurseur de baryum dont la dissolution nécessite le moins d'eau. Restreindre la quantité d'eau permet de limiter et de contrôler l'hydrolyse des alcoxydes de silicium.

Le précurseur d'oxyde de magnésium peut être choisi parmi : l'acétate de magnésium, le nitrate de magnésium, le chlorure de magnésium, et leurs mélanges. Le précurseur d'oxyde de magnésium est de préférence de l'acétate de magnésium lorsque le précurseur d'oxyde de baryum est de l'acétate de baryum afin d'éviter la formation de précipités.

Le précurseur d'oxyde de calcium peut être choisi parmi : l'acétate de calcium, le nitrate de calcium, le chlorure de calcium, et leurs mélanges. Le précurseur d'oxyde de calcium est de préférence de l'acétate de calcium afin d'éviter la formation de précipités.

Le précurseur d'oxyde de bore est de préférence le trioxyde de bore.

Lors de l'ajout des précurseurs, le ratio entre la concentration de l'eau et la concentration de l'alcoxyde de silicium est par exemple compris entre environ 30 et environ 70. Un tel ratio entraine l'hydrolyse complète de l'alcoxyde de silicium.

Lors de l'ajout des précurseurs, le ratio entre la concentration d'acide et la concentration d'alcoxyde de silicium est compris entre environ 1,5 et environ 3, de préférence entre environ 2 et environ 2,5, permettant de réguler le pH de la solution entre environ 3 et environ 4.

Le mélange est ensuite agité durant quelques minutes, de préférence 5 à 20 minutes, jusqu'à l'obtention d'un sol homogène.

Le procédé comprend ensuite la condensation **E4** du mélange pour former un xérogel. Lors de la condensation du mélange, les molécules de monomère et/ou d'oligomère réagissent entre elles : c'est la polymérisation. Il se forme entre les molécules de monomère et/ou oligomère des ponts M-O-M (où M = Si, Al, Ca, Mg, B, Ba). Les précurseurs sont alors soit emprisonnés dans le réseau, soit intégrés dans le réseau ou un mélange des deux. Un xérogel est un matériau obtenu suite à un procédé sol-gel qui se forme au fur et à mesure que l'évaporation du solvant a lieu et que la condensation se poursuit.

La polymérisation peut être réalisée à une température comprise entre environ 70°C et environ 90°C, de préférence entre environ 75°C et environ 85°C, encore de préférence environ 80°C.

Les étapes allant de l'hydrolyse **E2** à la condensation **E4** correspondent à un procédé sol-gel. L'utilisation d'un procédé sol-gel permet une meilleure homogénéisation finale des oxydes entrant dans la composition du verre de scellement. Par ailleurs, la température d'élaboration du verre (c'est-à-dire la température appliquée permettant l'obtention du verre) peut être abaissée notamment grâce à l'homogénéité à l'échelle moléculaire des gels obtenus par ce procédé.

Le procédé comprend encore la pulvérisation **E5** du xérogel pour obtenir une poudre d'oxydes. Celle-ci peut être réalisée par calcination à une température comprise entre environ 750°C et environ 950°C, de préférence entre environ 800°C et environ 900°C, encore de préférence environ 850°C, pendant environ 2 heures à environ 6 heures, de préférence environ 3 heures à environ 5 heures, encore de préférence environ 4 heures. La calcination permet en outre de supprimer des composés indésirables présents dans le xérogel.

Le procédé comprend ensuite l'élaboration du verre **E6** par vitrification de la poudre d'oxydes pour obtenir le verre de scellement. L'élaboration du verre peut être réalisée par traitement thermique à une température comprise entre environ 1100°C et environ 1300°C.

Ce procédé permet d'obtenir un verre de scellement de composition suivante :

(BaO)ᵤ(Al₂O₃)ᵥ(CaO)_{w}(SiO₂)ₓ(B₂O₃)y(MgO)_{z};

avec 0,3 < u < 0,4 ; 0,015 < v < 0,035 ; 0,05 < w < 0,15 ; 0,25 < x < 0,4 ; 0,05 < y < 0,15 ; et 0,05 < z < 0,15.

L'oxyde de baryum (BaO) permet d'augmenter le coefficient d'expansion thermique permettant au verre de scellement de s'adapter aux matériaux des autres composants d'une cellule de piles à combustible ou d'un électrolyseur hautes températures quelle que soit la phase de fonctionnement dans laquelle ces matériaux se trouvent, en particulier chauffage, refroidissement, etc.

Le BaO diminue la viscosité du verre fondu, la température de transition vitreuse et la température de cristallisation permettant la fabrication du verre de scellement à une température d'élaboration plus basse.

L'alumine (Al₂O₃) diminue la viscosité du verre fondu et retarde la cristallisation du verre de scellement.

L'oxyde de calcium (CaO) et l'oxyde de magnésium (MgO) favorisent également l'augmentation du coefficient d'expansion thermique et diminuent les températures de transition vitreuse et de ramollissement.

Le trioxyde de bore (B₂O₃) favorise la diminution de la température de transition vitreuse et de la viscosité.

Ainsi, le verre de scellement obtenu assure un scellement électriquement résistif, étanche aux gaz et stable chimiquement avec les autres matériaux composant la cellule, tels que l'acier, la zircone yttriée, lors du fonctionnement de la cellule à des températures comprises entre environ 500°C et environ 800°C.

Le verre de scellement décrit ci-dessus peut être utilisé pour isoler les compartiments anodiques et cathodiques de piles à combustible ou électrolyseurs hautes températures, en particulier ceux utilisant des membranes à oxydes solides comme électrolyte.

Grâce au procédé sol-gel utilisé, une meilleure homogénéisation finale des oxydes constituant le verre de scellement est réalisée.

### Exemple 1

Dans cet exemple 1, une pile à combustible comprend comme matériau de scellement un verre de scellement (CM2) correspondant à la description ci-dessus. Le tableau 1 détaille les différents matériaux utilisés pour la pile.

**Tableau 1**

| Verre de scellement | Anode (épaisseur) | Electrolyte (épaisseur) | Cathode (épaisseur) | Aire active de la cathode |
|---|---|---|---|---|
| CM2 | NiO-8YSZ | 8YSZ | LSM | 0,79 cm² |
| | 1 mm | 10 µm | environ 50 µm | |

YSZ désigne de l'oxyde de zirconium stabilisé par de l'oxyde d'yttrium. 8YSZ signifie qu'il y a 8 % en mole d'oxyde d'yttrium. NiO-8YSZ désigne un mélange à 50 % - 50 % en volume de NiO et de 8YSZ. LSM désigne le La_{0,8}Sr_{0,2}MnO₃.

L'évolution de la densité de courant à potentiel constant a été évaluée. Pour cela, la pile a été soumise à une polarisation à potentiel constant de 0,5 V à 800°C pendant 2 heures.

La densité de courant mesurée est particulièrement stable durant les 2 heures de mesures. Le rapport de la densité de courant au bout de 2 heures de polarisation sur la densité de courant initiale est de 0,97. Ainsi, la dégradation de la pile est relativement faible.

### Exemple comparatif 1

Dans cet exemple comparatif 1, une pile à combustible comprend comme matériau de scellement un verre commercial réalisé par voie solide-solide : Schott 8422. Le tableau 2 détaille les différents matériaux utilisés pour la pile.

**Tableau 2**

| Verre de scellement | Anode (épaisseur) | Electrolyte (épaisseur) | Cathode (épaisseur) | Aire active de la cathode |
|---|---|---|---|---|
| Schott 8422 | NiO-8YSZ | 8YSZ | LSM | 0,79 cm² |
| | 1 mm | 10 µm | environ 50 µm | |

L'évolution de la densité de courant à potentiel constant a été évaluée. Pour cela, la pile a été soumise à une polarisation à potentiel constant de 0,5 V à 800°C pendant 2 heures.

La densité de courant mesurée diminue constamment, passant de 0,27 A/cm² à 0,20-0,21 A/cm² au cours de la mesure. Le rapport de la densité de courant au bout de 2 heures de polarisation sur la densité de courant initiale est de 0,75. Ainsi, la dégradation de la pile est bien plus importante que pour l'exemple 1 ci-dessus.

### Exemple 2

Dans cet exemple 2, le verre de scellement CM2 est soumis à différents traitements thermiques qui correspondent à l'étape de scellement puis à une utilisation normale d'une pile à combustible hautes températures. Le Coefficient d'Expansion Themique (CET) des matériaux formés est évalué après chaque traitement. Les cristaux présents au sein du verre sont également identifiés et présentés dans le tableau 3.

**Tableau 3**

| Verre de scellement CM2 | 850°C-2h (scellement) | 850°C-2h + 800°C-100h | 850°C-2h + 800°C-200h | 850°C-2h + 700°C-100h |
|---|---|---|---|---|
| CET (1.10⁻⁶ K⁻¹) | 11,9 | 11,3 | 11,2 | / |
| Cristaux présents | MgSiO₃ Silicates de baryum | MgSiO₃ Silicates de baryum | MgSiO₃ Silicates de baryum | MgSiO₃ Silicates de baryum |

Le CET du verre évolue peu après l'opération de scellement simulée à 850°C de 2 heures suivi d'un traitement thermique de 100 heures à 800°C (différence de 5% envron). Il n'évolue plus après 200 heures de traitement thermique à 800°C.

Les cristaux identifiés ont des CET qui sont proches de celui des matériaux obtenus après des traitements thermique à 700° C ou à 800° C. On note l'absence de cristaux de monocelsian qui ont un CET très faible et qui peuvent nuire à l'intégrité mécanique du matériau et d'un éventuel assemblage à l'aide de celui-ci à haute température. Il n'y a également pas d'hexacelsian, qui est un cristal métastable et qui tend à se transformer en monocelsain au cours du temps.

Exemple comparatif 2 Dans cet exemple comparatif 2, un verre nommé G18 issu du document « Journal of Power Sources, Synthesis and properties of barium aluminosilicate solid oxide fuel cell glass-ceramic sealant, de K.D. Meinhardt, D.-S. Kim, Y.-S Chou et K.S WEIL » avec comme composition (35mol% BaO, 15mol% CaO, 5mol% Al₂O₃, 10mol% B₂O₃, 35mol% SiO₂), une composition proche du verre CM2 mais le verre G18 a été obtenu par une voie solide, a été soumis à différents traitements thermiques. Le Coefficient d'Expansion Themique (CET) des matériaux formés est évalué après chaque traitement. Les cristaux présents au sein du verre sont également identifiés et présentés dans le tableau 4.

**Tableau 4**

| Verre de scellement G18 | 850°C-1h (scellement) | 850°C-2h + 750°C-1 semaine | 850°C-2h + 750°C-2 semaines |
|---|---|---|---|
| CET (1.10⁻⁶K⁻¹) | 11,8 | 10 | 10,3 |
| Cristaux présents | BaSiO₃ Hexacelsian Monocelsian Ba₃CaSi₂O₈ | BaSiO₃ Hexacelsian Monocelsian Ba₃CaSi₂O₈ | BaSiO₃ Hexacelsian Monocelsian Ba₃CaSi₂O₈ |

Le CET du verre G18 évolue plus après scellement suivi d'un traitement thermique d'une semaine (différence de 15% environ) que le CET du verre CM2 (différence de 5% environ), ce qui peut être nuisible à l'intégrité mécanique du scellement à haute température.

De plus, des cristaux d'hexacelsian, métastable à haute température, et de monocelsian, ont été identifiés dans le matériau G18 après 1 à semaines de traitement thermique à 750°C. Ces cristaux ont tendance à faire diminuer le CTE au cours du temps passé à haute température et vont nuire à l'intégrité mécanique de l'assemblage réalisé à l'aide de ce joint de scellement. Après différents traitements thermiques de 100 heures à 700°C ou à 800°C, aucun de ces 2 cristaux n'ont été observés dans le matériau CM2, ce qui atteste de meilleures stabilités physico-chimique et thermomécanique du verre réalisé par voie sol-gel, et donc que les propriétés physico-chimique et thermomécanique apportées par les ajouts des différents précurseurs dépendent du procédé de fabrication du verre.

## Revendications

1. Procédé de synthèse d'un verre de scellement par voie sol-gel, comprenant les étapes de :
- la formation (E1) d'une solution par la mise en solution d'un alcoxyde de silicium dans un solvant ;
- l'hydrolyse (E2) de l'alcoxyde de silicium dans la solution pour former un monomère, un oligomère inorganique, ou un mélange de ceux-ci ;
- l'ajout d'un précurseur d'alumine, d'un précurseur d'oxyde de baryum, d'un précurseur d'oxyde de calcium, d'un précurseur d'oxyde de bore, d'un précurseur d'oxyde de magnésium, d'eau et d'un acide dans la solution formant avec l'alcoolate de silicium un mélange (E3.1, E3.2) ;
- l'agitation puis la condensation (E4) du mélange pour former un xérogel ;
- la pulvérisation (E5) du xérogel pour obtenir une poudre d'oxydes ;
- l'élaboration verrière (E6) de la poudre d'oxydes pour obtenir le verre de scellement.

2. Procédé selon la revendication 1, dans lequel l'élaboration verrière de verres est réalisée à une température comprise entre 1100°C et 1300°C.

3. Procédé selon ta revendication 1 ou la revendication 2, dans lequel lors de l'ajout des précurseurs, le ratio entre la concentration de l'eau et la concentration de l'alcoxyde de silicium est compris entre 30 et 70.

4. Procédé selon l'une des revendications 1 à 3, dans lequel lors de l'ajout des précurseurs, le ratio entre la concentration d'acide et la concentration d'alcoxyde de silicium est compris entre 2 et 2,5, permettant de réguler le pH de la solution à environ 4.

5. Procédé selon l'une des revendications 1 à 4, dans lequel le précurseur d'alumine est ajouté à la solution avant le précurseur d'oxyde de baryum, le précurseur d'oxyde de calcium, le précurseur d'oxyde de bore, le précurseur d'oxyde de magnésium, l'eau et l'acide.

6. Procédé selon la revendication 5, dans lequel après l'ajout du précurseur d'alumine, la solution est maintenue à une température comprise entre 15°C et 30°C, de préférence entre 15°C et 25°C, encore de préférence environ 20°C, pendant environ 10 à 20 heures, de préférence 12 à 16 heures, encore de préférence environ 14 heures.

7. Procédé selon l'une des revendications 1 à 6, dans lequel l'alcoxyde de silicium est choisi parmi : le tétraéthylorthosilicate (TEOS), le tétraméthylorthosilicate (TMOS), leurs dérivés et les mélanges de ceux-ci.

8. Procédé selon l'une des revendications 1 à 7, dans lequel le précurseur d'alumine est choisi parmi : le tri-sec-butoxyde d'aluminium, le nitrate d'aluminium, le chlorure d'aluminium, et leurs mélanges.

9. Procédé selon l'une des revendications 1 à 8, dans lequel le précurseur d'oxyde de baryum est choisi parmi : l'acétate de baryum, le chlorure de baryum, l'oxyde de baryum, le nitrate de baryum, et leurs mélanges.

10. Procédé selon l'une des revendications 1 à 9, dans lequel le précurseur d'oxyde de magnésium est choisi parmi : acétate de magnésium, le nitrate de magnésium, le chlorure de magnésium, et leurs mélanges.

11. Procédé selon l'une des revendications 1 à 10, dans lequel le précurseur d'oxyde de calcium est choisi parmi : l'acétate de calcium, le nitrate de calcium, le chlorure de calcium, et leurs mélanges.

12. Procédé selon l'une des revendications 1 à 11, dans lequel le précurseur d'oxyde est le trioxyde de bore.

13. Procédé selon l'une des revendications 1 à 12, dans lequel l'hydrolyse est réalisée à une température comprise entre 50°C et 70°C, de préférence entre 55°C et 65°C, encore de préférence d'environ 60°C.

14. Procédé selon l'une des revendications 1 à 13, dans lequel la polymérisation est réalisée à une température comprise entre 70°C et 90°C, de préférence entre 75°C et 85°C, encore de préférence d'environ 80°C.

15. Procédé selon l'une des revendications 1 à 14, dans lequel la pulvérisation du xérogel est réalisée par calcination à une température comprise entre 750°C et 950°C, de préférence entre 800°C et 900°C, encore de préférence d'environ 850°C, pendant 2 heures à 6 heures, de préférence 3 heures à 5 heures, encore de préférence environ 4 heures.

16. Verre obtenu avec le procédé selon l'une des revendications 1 à 15, de composition suivante :
(BaO)ᵤ(Al₂O₃)ᵥ(CaO)_{w}(SiO₂)ₓ(B₂O₃)_{y}(MgO)_{z};
Avec 0,3 < u < 0,4 ; 0,015 < v < 0,035 ; 0,05 < w < 0,15 ; 0,25 < x < 0,4 ; 0,05 < y < 0,15 ; et 0,05 < z < 0,15.

17. Pile à combustible ou électrolyseur hautes températures, comprenant une succession de compartiments anodiques, une succession de compartiments cathodiques, une succession de joints,
les compartiments anodiques et cathodiques étant alternés et empilés,
dans lequel les joints sont réalisés en verre selon la revendication 16.

## Patentansprüche

1. Syntheseverfahren eines Glaslölmittels mit niedrigem Schmelzpunkt auf dem Sol-Gel-Weg, umfassend die Schritte:
- der Bildung (E1) einer Lösung durch Lösen eines Siliziumalkoxids in einem Lösungsmittel;
- der Hydrolyse (E2) des Siliziumalkoxids in der Lösung zum Bilden eines Monomers, eines anorganischen Oligomers oder einer Mischung derselben;
- dem Hinzufügen eines Aluminiumoxid-Vorläufers, eines Bariumoxid-Vorläufers, eines Kalziumoxid-Vorläufers, eines Boroxid-Vorläufer, eines Magnesiumoxid-Vorläufers, eines Wasser- und Säure-Vorläufers in der Lösung, die mit dem Siliziumalkoolat eine Mischung bildet (E3.1, E3.2);
- dem Rütteln, dann dem Kondensieren (E4) der Mischung zum Bilden eines Xerogels;
- dem Besprühen (E5) des Xerogels zum Erhalt eines Oxidpulvers;
- der Glasbereitung (E6) des Oxidpulvers zum Erhalt des Bleiglases mit niedrigem Schmelzpunkt.

2. Verfahren gemäß Anspruch 1, bei dem die Glasbereitung von Gläsern bei einer zwischen 1.100° C und 1.300° C inbegriffenen Temperatur realisiert wird.

3. Verfahren gemäß Anspruch 1 oder Anspruch 2, bei dem beim Hinzufügen der Vorläufer das Verhältnis zwischen der Konzentration des Wassers und der Konzentration des Siliziumalkoxids zwischen 30 und 70 inbegriffen ist.

4. Verfahren gemäß irgendeinem der Ansprüche 1 bis 3, bei dem beim Hinzufügen der Vorläufer das Verhältnis zwischen der Säurekonzentration und der Siliziumalkoxidkonzentration zwischen 2 und 2,5 inbegriffen ist, was die Einstellung des ph-Wertes der Lösung auf ungefähr 4 zulässt.

5. Verfahren gemäß irgendeinem der Ansprüche 1 bis 4, bei dem der Aluminiumoxidvorläufer vor dem Bariumoxid-Vorläufer, dem Kalziumoxid-Vorläufer, dem Boroxid-Vorläufer, dem Magnesiumoxid-Vorläufer, dem Wasser und der Säure zu der Lösung hinzugefügt wird.

6. Verfahren gemäß Anspruch 5, bei dem nach dem Hinzufügen des Aluminiumoxid-Vorläufers die Lösung während ungefähr 10 bis 20 Stunden, bevorzugt 12 bis 16 Stunden, weiter bevorzugt ungefähr 14 Stunden bei einer zwischen 15° C und 30° C, bevorzugt zwischen 15° C und 25° C, weiter bevorzugt bei ungefähr 20° C inbegriffenen Temperatur gehalten wird.

7. Verfahren gemäß irgendeinem der Ansprüche 1 bis 6, bei dem das Siliziumalkoxid ausgewählt ist aus: Tetraethylorthosilikat (TEOS), Tetramethylorthosilikat (TMIS), deren Derivate und den Mischungen derselben.

8. Verfahren gemäß irgendeinem der Ansprüche 1 bis 7, bei dem der genannte Aluminiumoxid-Vorläufer ausgewählt ist aus: Tri-Sec-Butoxidaluminium, Aluminiumnitrat, Aluminiumchlorid und deren Mischungen.

9. Verfahren gemäß irgendeinem der Ansprüche 1 bis 8, bei dem der Bariumoxid-Vorläufer ausgewählt ist aus: Bariumacetat, Bariumchlorid, Bariumoxid, Bariumnitrat und deren Mischungen.

10. Verfahren gemäß irgendeinem der Ansprüche 1 bis 9, bei dem der Magnesiumoxid-Vorläufer ausgewählt ist aus: Magnesiumacetat, Magnesiumnitrat, Magnesiumchlorid und deren Mischungen.

11. Verfahren gemäß irgendeinem der Ansprüche 1 bis 10, bei dem der Kalziumoxid-Vorläufer ausgewählt ist aus: Kalziumacetat, Kalziumnitrat, Kalziumchlorid und deren Mischungen.

12. Verfahren gemäß irgendeinem der Anspruch 1 bis 11, bei dem der Oxid-Vorläufer Bortrioxid ist.

13. Verfahren gemäß irgendeinem der Ansprüche 1 bis 12, bei dem die Hydrolyse bei einer zwischen 50° C und 70° C, bevorzugt zwischen 55° C und 65° C inbegriffenen Temperatur, weiter bevorzugt ungefähr 60° C realisiert wird.

14. Verfahren gemäß irgendeinem der Ansprüche 1 bis 13, bei dem die Polymerisierung bei einer zwischen 70° C und 90° C, bevorzugt zwischen 75° C und 85° C inbegriffenen Temperatur, weiter bevorzugt ungefähr 80° C realisiert wird.

15. Verfahren gemäß irgendeinem der Ansprüche 1 bis 14, bei dem das Versprühen des Xerogels per Kalzinierung während 2 Stunden bis 6 Stunden, bevorzugt zwischen 3 Stunden und 5 Stunden, weiter bevorzugt ungefähr 4 Stunden bei einer zwischen 750° C und 950° C, bevorzugt zwischen 800° C und 900° C inbegriffenen Temperatur, weiter bevorzugt bei ungefähr 850° C realisiert wird.

16. Glas, mit dem Verfahren gemäß irgendeinem der Ansprüche 1 bis 15 erhaltenes, mit der folgenden Zusammensetzung:
(BaO)ᵤ(Al₂O₃)ᵥ(CaO)_{w}(SiO₂)ₓ(B₂O₃)_{y}(MgO)_{z};
Wobei 0,3 < u < 0,4; 0,015 < v < 0,035; 0,05 < w < 0,15; 0,25 < x < 0,4> 0,05 < y < 0,15; und 0,05 < z < 0,15.

17. Hochtemperatur-Brennstoffzelle oder - Elektrolyseur, umfassend eine Folge von anodischen Fächern, eine Folge von kathodischen Fächern, eine Folge von Dichtungen, wobei die anodischen und kathodischen Dichtungen abwechseln und gestapelt sind, bei der / dem die Dichtungen aus Glas gemäß Anspruch 16 realisiert sind.

## Claims

1. Method for synthesising a sealing glass by sol-gel process, comprising the steps of:
- forming (E1) a solution by dissolving an silicon alkoxide in a solvent;
- the hydrolysis (E2) of the silicon alkoxide in the solution in order to form a monomer, an inorganic oligomer, or a mixture thereof;
- adding an alumina precursor, a barium oxide precursor, a calcium oxide precursor, a boron oxide precursor, a magnesium oxide precursor, water and acid in the solution forming with the silicon alkoxide a mixture (E3.1, E3.2);
- agitating then condensing (E4) the mixture in order to form a xerogel;
- pulverising (E5) the xerogel in order to obtain an oxide powder;
- glass elaboration (E6) of the oxide powder in order to obtain the solder glass.

2. Method according to claim 1, wherein the glass elaboration of glass is carried out at a temperature between 1100°C and 1300°C.

3. Method according to claim 1 or claim 2, wherein during the adding of the precursors, the ratio between the concentration of the water and the concentration of the silicon alkoxide is between 30 and 70.

4. Method according to one of claims 1 to 3, wherein during the adding of the precursors, the ratio between the concentration of acid and the concentration of silicon alkoxide is between 2 and 2.5, making it possible to adjust the pH of the solution to about 4.

5. Method according to one of claims 1 to 4, wherein the alumina precursor is added to the solution before the barium oxide precursor, the calcium oxide precursor, the boron oxide precursor, the magnesium oxide precursor, the water and the acid.

6. Method according to claim 5, wherein after the adding of the alumina precursor, the solution is maintained at a temperature between 15°C and 30°C, preferably between 15°C and 25°C, more preferably about 20°C, for about 10 to 20 hours, preferably 12 to 16 hours, more preferably about 14 hours.

7. Method according to one of claims 1 to 6, wherein the silicon alkoxide is chosen from: tetraethylorthosilicate (TEOS), tetramethylorthosilicate (TMOS), derivatives thereof and mixtures thereof.

8. Method according to one of claims 1 to 7, wherein the alumina precursor is chosen from: aluminium-tri-sec-butoxide, aluminium nitrate, aluminium chloride, and mixtures thereof.

9. Method according to one of claims 1 to 8, wherein the barium oxide precursor is chosen from: barium acetate, barium chloride, barium oxide, barium nitrate, and mixtures thereof.

10. Method according to one of claims 1 to 9, wherein the magnesium oxide precursor is chosen from: magnesium acetate, magnesium nitrate, magnesium chloride, and mixtures thereof.

11. Method according to one of claims 1 to 10, wherein the calcium oxide precursor is chosen from: calcium acetate, calcium nitrate, calcium chloride, and mixtures thereof.

12. Method according to one of claims 1 to 11, wherein the oxide precursor is boron trioxide.

13. Method according to one of claims 1 to 12, wherein the hydrolysis is carried out at a temperature between 50°C and 70°C, preferably between 55°C and 65°C, and more preferably at about 60°C.

14. Method according to one of claims 1 to 13, wherein the polymerisation is carried out at a temperature between 70°C and 90°C, preferably between 75°C and 85°C, and further preferable at about 80°C.

15. Method according to one of claims 1 to 14, wherein the pulverising of the xerogel is carried out via calcination at a temperature between 750°C and 950°C, preferably between 800°C and 900°C, more preferably at about 850°C, for 2 hours to 6 hours, preferably 3 hours to 5 hours, more preferably about 4 hours.

16. Glass obtained with the method according to one of claims 1 to 15, with the following composition:
(BaO)ᵤ(Al₂O₃)ᵥ(CaO)_{w}(SiO₂)ₓ(B₂O₃)_{y}(MgO)_{z};
With 0.3 < u < 0.4; 0.015 < v < 0.035; 0.05 < w < 0.15; 0.25 < x < 0.4; 0.05 < y < 0.15; and 0.05 < z < 0.15.

17. High temperature fuel cell or electrolyser, comprising a succession of anode compartments, a succession of cathode compartments, a succession of seals,
with the anode and cathode compartments being alternating and stacked,
wherein the seals are carried out in glass according to claim 16.
